# EUROPÄISCHE PATENTANMELDUNG

(11) **EP 3 722 375 A1**
(43) Veröffentlichungstag der Anmeldung: **14.10.2020**
(21) Anmeldenummer: 19168515.5
(22) Anmeldetag: 10.04.2019
(51) Int. Cl.: C09D 5/00, C09D 7/61, C09D 15/00, C09D 133/06, C09D 175/04, B27K 5/02

(54) **LACKSYSTEM ZUM ZWISCHENSCHLIFFFREIEN AUFTRAG AUF EINE HOLZOBERFLÄCHE**

(71) Anmelder: Hesse GmbH & Co. KG, 59075 Hamm (DE)
(72) Erfinder: Schüßler, Lutz, 42855 Remscheid (DE); Conrad, Dirk, 59320 Ennigerloh (DE); Dülge, Jürgen, 59071 Hamm (DE); Dülge, Marcel, 59075 Hamm (DE); Muth, Dennis, 44229 Dortmund (DE); Scholz, Christian, 59269 Hamm (DE); Nischwitz, Corinna, 59269 Hamm (DE); Hesse, Hanna, 48317 Drensteinfurt (DE); Feldmann, Thomas, 54368 Lennestadt (DE)
(74) Vertreter: Kalkoff & Partner Patentanwälte PartmbB

(57) **Zusammenfassung**

Die Erfindung betrifft ein Lacksystem zum zwischenschlifffreien Auftrag auf eine Holzoberfläche. Um ein Lacksystem, ein Verfahren zur Herstellung eines Lacksystems sowie eine Verwendung eines solchen Lacksystems bereitzustellen, die einen deutlich vereinfachten und schnelleren Herstellungsprozess eines lackierten Holzwerkstücks ermöglichen und insbesondere einen Zwischenschliff nicht mehr notwendig machen, wodurch in vorteilhafter Weise eine deutliche Zeit- und Kostenersparnis erreicht wird, ist vorgesehen, dass das Lacksystem wenigstens eine Beschichtungsbasis mit einem Bindemittel und wenigstens einem als Untergrund- bzw. Holzoberflächenglätter wirkenden Salz aufweist.

## Beschreibung

Die Erfindung betrifft ein Lacksystem zum zwischenschlifffreien Auftrag auf eine Holzoberfläche, insbesondere auf eine nur grobgeschliffene und/oder nicht-grundierte Holzoberfläche. Weiterhin betrifft die Erfindung ein Verfahren zum Herstellen eines Lacksystems. Schließlich betrifft die Erfindung die Verwendung des Lacksystems auf einer nicht-zwischengeschliffenen Holzoberfläche.

Im Stand der Technik ist es eine etablierte Vorgehensweise zur Herstellung lackierter Holzoberflächen, einen Lack-Zwischenschliff vorzunehmen, um sich aus der Holzoberfläche heraus aufstellende Faserenden zu entfernen und somit ein zufriedenstellendes Ergebnis bei der abschließenden Lackierung, insbesondere mit einem transparenten Klarlack, zu erreichen. Dabei gilt im Stand der Technik ein Lack-Zwischenschliff als immer zwingend notwendig, um sich in Kontakt mit Wasser oder Lack aufstellende Faserenden auf der Holzoberfläche zu entfernen. Ein solcher Lack-Zwischenschliff bzw. mehrere aufeinanderfolgend notwendige Schliffe führen jedoch zu einer langen Bearbeitungsdauer sowie einem hohen Aufwand bei der Herstellung lackierter Holzoberflächen.

Es ist daher eine Aufgabe der vorliegenden Erfindung, ein Lacksystem, ein Verfahren zur Herstellung eines Lacksystems sowie eine Verwendung eines solchen Lacksystems bereitzustellen, die einen deutlich vereinfachten und schnelleren Herstellungsprozess eines lackierten Holzwerkstücks ermöglichen und insbesondere einen Zwischenschliff nicht mehr notwendig machen, wodurch in vorteilhafter Weise eine deutliche Zeit- und Kostenersparnis erreicht wird.

Die Aufgabe wird erfindungsgemäß durch ein Lacksystem gemäß Anspruch 1, ein Verfahren gemäß Anspruch 13 sowie im Rahmen einer Verwendung gemäß Anspruch 14 gelöst. Vorteilhafte Weiterbildungen der Erfindung sind in den abhängigen Ansprüchen angegeben.

Das erfindungsgemäße Lacksystem zum zwischenschlifffreien Auftrag auf eine Holzoberfläche, insbesondere auf eine nur grobgeschliffene und/oder nicht-grundierte Holzoberfläche, weist wenigstens eine Beschichtungsbasis umfassend ein Bindemittel und wenigstens ein als Untergrund- bzw. Holzoberflächenglätter wirkendes Salz auf.

Das erfindungsgemäße Verfahren zum Herstellen eines Lacksystems, insbesondere eines erfindungsgemäßen Lacksystems, zum zwischenschlifffreien Auftrag auf eine Holzoberfläche umfasst wenigstens als Verfahrensschritte ein Herstellen einer Beschichtungsbasis umfassend ein Bindemittel sowie ein Einarbeiten eines als Untergrund- bzw. Holzoberflächenglätter wirkenden Salzes durch Dispergieren, Vermahlen oder Fällen und dabei bevorzugt unter Verwendung einer Rührwerksmühle bzw. einer Perlmühle.

Weiterhin umfasst die Erfindung eine Verwendung eines Lacksystems, insbesondere eines erfindungsgemäßen Lacksystems, zum zwischenschlifffreien Auftrag auf eine nicht-zwischengeschliffene und/oder insbesondere nur grobgeschliffene und/oder nicht-grundierte Holzoberfläche zum Erzeugen einer fertigen Lackbeschichtung.

Die Erfindung hat den Vorteil, dass überraschend von dem allgemein anerkannten Grundsatz abgewichen werden kann, dass eine Holzoberfläche vor dem Lackieren geschliffen oder nach dem Lackieren einer ersten Lackschicht zunächst zwischengeschliffen werden muss, um eine optisch und haptisch ansprechende Holzoberfläche zu erhalten. Ein dazu führender Effekt kann sein, dass die Zugabe eines Salzes zu einer Verschiebung eines Ionenkonzentrationsgefälles zwischen dem Holz und dem aufzutragenden Lacksystem führt, wodurch ein osmotischer Effekt auftritt, der ein Aufstellen von Holzfasern an der Oberfläche des zu lackierenden Holzes deutlich verringert oder sogar vollständig verhindert.

Dabei kann das Lacksystem grundsätzlich ein beliebiges Lacksystem mit beliebig vielen Bestandteilen sein. Grundsätzlich weist das Lacksystem wenigstens ein Bindemittel auf und kann darüber hinaus auch Füllstoff, Pigment, Lösemittel, Harz und/oder Additiv bzw. weitere Hilfsstoffe enthalten. Bevorzugt ist das Lacksystem zum Auftrag mit handelsüblichen Applikationssystemen und insbesondere zur Spritzapplikation geeignet, wobei durch die erfindungsgemäße Zugabe des Salzes bevorzugt die Verarbeitbarkeit des Lacksystems nicht verändert und insbesondere nicht eingeschränkt wird. Weiterhin bevorzugt ist das Lacksystem bereits zur Endbehandlung und/oder zur abschließenden Lackierung eines Holzwerkstücks geeignet. Besonders bevorzugt ist eine ausschließliche Behandlung des zu lackierenden Holzwerkstücks mit dem Lacksystem möglich, sodass insbesondere bevorzugt weder eine Grundierung, noch eine nachfolgende weitere Lackierung notwendig ist. Darüber hinaus kann jedoch auch auf die Lackschicht aus dem erfindungsgemäßen Lacksystem noch eine oder mehrere, insbesondere transparente Decklackschichten, insbesondere eine hochglänzende und/oder besonders harte Lackschicht aufgetragen werden.

Grundsätzlich kann das Lacksystem und/oder der Decklack aus einer oder mehreren zueinander identischen oder sich in der Zusammensetzung voneinander unterscheidenden Schichten gebildet sein. Zudem kann das Lacksystem und/oder der Decklack transparent, transluzent oder deckend sein, wobei jeweils sowohl eine farblose, als auch eine farbige Ausführung denkbar ist. Schließlich kann das Lacksystem und/oder der Decklack einen beliebigen Glanzgrad, insbesondere zwischen stumpfmatt und hochglänzend, aufweisen.

Das Lacksystem und insbesondere das im Lacksystem befindliche Bindemittel kann eine beliebige chemische Basis haben. Beispielsweise kann es sich um ein chemisch vernetzendes Bindemittel wie Polyurethan oder um ein strahlungsvernetzendes Bindemittel, insbesondere ein UV-härtendes Bindemittel, handeln. Weiterhin kann es sich bei dem Bindemittel um ein beliebiges Kunstharz, wie beispielsweise Acrylatharz oder Alkydharz, handeln, wobei Acrylatharz vor Alkydharz bevorzugt wird. Ebenfalls kann das Bindemittel ein Einkomponenten-Bindemittel oder ein Zweikomponenten-Bindemittel (2K-Bindemittel) sein. Dabei handelt es sich bevorzugt um ein chemisch- bzw. reaktivabbindendes Bindemittel, wobei jedoch auch ein strahlungs- oder wärmehärtbares oder säurehärtendes Bindemittel oder ein physikalisch trocknendes Bindemittel, beispielsweise ausschließlich durch Lösemittelverdunstung, denkbar ist.

Weiterhin kann das Lacksystem lösemittelfrei sein oder ein beliebiges Lösemittelsystem aufweisen, das jedoch bevorzugt nicht auf Wasserbasis ist. Bevorzugt umfasst das Lösemittel n-Butylacetat, besonders bevorzugt zu mehr als 20 % und insbesondere zu mehr als 50 % des Gesamtvolumens des Lösemittels. Ganz besonders bevorzugt wird als Lösemittel ausschließlich n-Butylacetat verwendet. Alternativ kann auch ein Lösemittelgemisch eingesetzt werden, das bevorzugt als Hauptbestandteil und insbesondere bevorzugt zu über 90 % des Volumens oder der Masse aus n-Butylacetat besteht. Weiterhin kann das Lacksystem als weitere Lösemittel beispielsweise Aceton, insbesondere mit einem Massenanteil von zwischen 0,1 % und 2 %, und/oder Xylol, also Dimethylbenzene, insbesondere mit einem Massenanteil zwischen 0,1 % und 2 %, und/oder Methylisobutylketon, insbesondere mit einem Massenanteil zwischen 0,1 % und 5 %, enthalten. Alternativ kann ein Lösemittelgemisch aus n-Butylacetat und Methoxypropanol sowie ggf. in geringen Mengen noch weiteren Lösemitteln verwendet werden, wobei das Verhältnis von n-Butylacetat zu Methoxypropanol bevorzugt zwischen 2:1 und 1:5, besonders bevorzugt zwischen 1:1 und 1:3 und ganz besonders bevorzugt zwischen 1,5:2 und 1:2,5 bezogen auf die Massen beträgt. Schließlich ist bevorzugt, dass wenigstens der Hauptteil des Lösemittels und besonders bevorzugt alle enthaltenen Lösemittel flüchtige Bestandteile des Lacksystems sind und entsprechend im ausgehärteten Lack im Wesentlichen nicht mehr enthalten sind.

Unter einem zwischenschlifffreien Auftrag wird grundsätzlich ein Auftrag des Lacksystems in einer oder mehreren Schichten und/oder Arbeitsgängen auf eine Oberfläche, insbesondere eine Holzoberfläche, verstanden, bei dem wenigstens nach dem Auftrag der ersten Schicht und besonders bevorzugt auch nach dem Auftrag aller nachfolgenden Schichten kein Schliff der Oberfläche erfolgt. Aufgrund der erfindungsgemäßen Eigenschaften des Lacksystems ist ein solcher Schliff, insbesondere Zwischenschliff, nicht mehr notwendig, da der unmittelbare Auftrag des Lacksystems auf die Holzoberfläche nicht mehr zu einem starken Aufstellen von Holzfaserenden führt.

Grobgeschliffen im Sinne der Erfindung bedeutet zunächst, dass kein Schliff vorgenommen wurde, um feine Faserenden abzuschleifen, die sich nachfolgend an der Oberfläche des Holzes, insbesondere im Rahmen einer Lackierung, aufstellen könnten. Bevorzugt ist zudem lediglich ein Schliff der Holzoberfläche mit einer Körnung gröber als 150, bevorzugt gröber als 120, besonders bevorzugt gröber als 100 und insbesondere bevorzugt gröber als 80 notwendig. Insbesondere bevorzugt bedeutet grobgeschliffen, dass im Rahmen der Untergrundvorbehandlung kein Nassschliff zum Entfernen von sich aufrichtenden Holzfasern vorgenommen wurde.

Unter einer nicht-grundierten Holzoberfläche wird eine Holzoberfläche verstanden, die nicht vor dem Auftrag des Lacksystems mit einer darunterliegenden, auf dem Holz verbleibenden oder zumindest teilweise wieder abgeschliffenen Beschichtung versehen wurde. Insbesondere bevorzugt kann mittels des erfindungsgemäßen Lacksystems auf eine Grundierung und einen nachfolgenden Zwischenschliff zum Entfernen sich aufrichtender Holzfasern verzichtet werden. Entsprechend kann das Lacksystem bevorzugt auf eine chemisch unbehandelte Holzoberfläche und/oder ohne eine Grundierung aufgetragen werden. Darüber hinaus kann das Lacksystem aber auch unmittelbar auf eine gebleichte und/oder gebeizte Holzoberfläche, insbesondere ohne eine vorherige Beschichtung, aufgetragen werden.

Bei dem Verfahren erfolgt das Einarbeiten und insbesondere ein Dispergieren des Salzes im Lacksystem und insbesondere im Bindemittel des Lacksystems bevorzugt mittels einer Rührwerksmühle, einer Perlmühle, einer Luftstrahlmühle oder eines Dreiwalzenstuhls. Dabei ist es bevorzugt, dass das Salz möglichst fein verteilt und/oder möglichst feinteilig zerteilt und/oder gleichmäßig dispergiert wird, um eine gleichmäßige und gute Wirkung zu erreichen. Alternativ oder zusätzlich kann eine Feinteiligkeit des Salzes im Lacksystem auch durch Fällen des Salzes vor der Zugabe oder unmittelbar im Lacksystem erfolgen. Zudem kann das als Untergrund- bzw. Holzoberflächenglätter wirkende Salz auch bereits als Salzkonzentrat, insbesondere Konzentrat feinkörnigen bzw. gefällten Salzes, einem Lacksystem zugegeben werden.

Die Verwendung des Lacksystems zum zwischenschlifffreien Erzeugen einer fertigen Lackbeschichtung bedeutet insbesondere, dass das Lacksystem unmittelbar auf die Holzoberfläche aufgetragen werden kann, um eine Lackierung bzw. eine Lackschicht zu erzeugen, die nicht zwischengeschliffen und/oder überlackiert werden muss. Besonders bevorzugt stellt das Auftragen des Lacksystems dabei die abschließende und vollständige Lackierung der Holzoberfläche dar, sodass ein fertig lackiertes Holzwerkstück erhalten wird. Alternativ wird noch eine oder mehrere weitere Decklackschichten auf der Lackschicht des erfindungsgemäßen Lacksystems aufgebracht.

Der Untergrund- bzw. Holzoberflächenglätter kann dabei aus einer einzelnen chemischen Substanz oder einem Substanzgemisch gebildet werden. Bevorzugt ist der Untergrund- bzw. Holzoberflächenglätter ausschließlich aus Feststoffen, insbesondere ausschließlich aus Salzen gebildet. Dabei ist es die grundsätzliche Aufgabe des Untergrund- bzw. Holzoberflächenglätters, ein Aufstellen von Holzfasern auf bzw. aus der Oberfläche des zu lackierenden Holzes heraus zu verringern oder sogar vollständig zu verhindern, sodass eine zwischenschlifffreie Lackierung möglich ist.

Nach einer vorteilhaften Weiterbildung des erfindungsgemäßen Lacksystems ist vorgesehen, dass der Untergrund- bzw. Holzoberflächenglätter ein anorganisches Salz umfasst und besonders bevorzugt ausschließlich aus einem oder mehreren verschiedenen anorganischen Salzen gebildet ist, wodurch eine besonders einfache und kostengünstige Herstellung des Lacksystems bei zugleich guter Lagerstabilität erreicht werden kann. Dabei weist das Salz bevorzugt ein Erdalkalimetallkation und/oder als Anion ein Nitrat, ein Sulfat, ein Hydroxid oder ein Halogenid auf.

Nach einer besonders vorteilhaften Weiterbildung des erfindungsgemäßen Lacksystems umfasst der Untergrund- bzw. Holzoberflächenglätter ein Alkalihalogenid oder ein Erdalkalihalogenid, insbesondere ein Kalium-, Magnesium- und/oder Calciumhalogenid, und besonders bevorzugt ist der Untergrund- bzw. Holzoberflächenglätter ausschließlich daraus gebildet. Obwohl grundsätzlich beliebige Erdalkalihalogenide denkbar sind, ist ein Salz mit Kalium-, Magnesium- oder Calcium-Kationen und/oder mit Fluorid-, Chlorid- oder Bromid-Anionen bevorzugt.

Eine ganz besonders vorteilhafte Weiterbildung des erfindungsgemäßen Lacksystems sieht vor, dass der Untergrund- bzw. Holzoberflächenglätter Calciumchlorid, insbesondere Calciumchlorid-Dihydrat, umfasst und insbesondere ausschließlich daraus gebildet ist, wodurch eine besonders günstige Herstellung bei zugleich besonders großem Effekt möglich ist. Grundsätzlich kann das Salz des Untergrund- bzw. Holzoberflächenglätters und insbesondere das Calciumchlorid beliebig hydratisiert oder auch wasserfrei sein. Bevorzugt wird jedoch das Calciumchlorid-Dihydrat, da dieses nicht so stark hygroskopisch ist wie das wasserfreie Calciumchlorid und somit zu einem besseren Lackierergebnis und einer robusteren, gegenüber Wasser unreaktiven Lackoberfläche führt. Zudem wird das Calciumchlorid-Dihydrat vor Calciumchlorid-Tetrahydrat und -Hexahydrat bevorzugt, da das Dihydrat günstiger und leichter zu verarbeiten ist.

Alternativ oder zusätzlich kann der Untergrund- bzw. Holzoberflächenglätter auch Kaliumchlorid, insbesondere Kaliumchlorid-Hexahydrat, und/oder Magnesiumchlorid, insbesondere Magnesiumchlorid-Hexahydrat, umfasst und insbesondere ausschließlich daraus gebildet sein.

Da der Untergrund- bzw. Holzoberflächenglätter einen osmotischen Effekt haben soll, werden Substanzen mit stark polaren bzw. elektrovalenten Bindungen bevorzugt. Besonders bevorzugt handelt es sich dabei um starke ionische Bindungen. Entsprechend ist der Untergrund- bzw. Holzoberflächenglätter bevorzugt ein Salz mit einem Elektronegativitätsunterschied der oder des Kations zu dem oder den Anionen von wenigstens 1,0, insbesondere wenigstens 1,5 auf der Pauling-Skala, wobei das Kation besonders bevorzugt ein Erdalkalimetallkation ist. Dabei beträgt die Elektronegativität beispielsweise von Calcium 1,00, von Magnesium 1,31 und von Chlor 3,16 auf der Pauling-Skala.

Um einen besonders deutlichen Effekt des Untergrund- bzw. Holzoberflächenglätters zu erreichen, ist es vorteilhaft, wenn der Untergrund- bzw. Holzoberflächenglätter als im Bindemittel dispergiertes und/oder ungelöstes Salz vorliegt. Insbesondere ist dies auch bevorzugt, da derart in einfacher Weise verhindert werden kann, dass der Untergrund- bzw. Holzoberflächenglätter bereits im Lacksystem mit weiteren Bestandteilen reagiert oder chemische, elektrovalente bzw. elektrostatische Bindungen bildet oder Effekte verursacht. Dabei ist es ganz besonders bevorzugt, dass das gesamte Lacksystem wasserfrei ist. Unter wasserfrei wird das Lacksystem verstanden, wenn kein Wasser zugegeben wurde und/oder der Wassergehalt aufgrund der eingesetzten Chemikalien unter 1 %, bevorzugt unter 0,5 %, besonders bevorzugt unter 0,25 % und insbesondere bevorzugt unter 0,1 % bezogen auf die Gesamtmasse beträgt.

Grundsätzlich kann der Untergrund- bzw. Holzoberflächenglätter im Lacksystem in einer beliebigen Konzentration bzw. mit einem beliebigen Massenanteil enthalten sein. Bevorzugt beträgt der Massenanteil des als Untergrund- bzw. Holzoberflächenglätter wirkenden Salzes zwischen 0,1 % und 15 %, bevorzugt zwischen 0,5 % und 12 %, besonders bevorzugt zwischen 1,5% und 10 % und insbesondere bevorzugt zwischen 2 % und 8 % bezogen auf die Gesamtmasse. Eine größere Menge Salz in der Zusammensetzung, insbesondere mehr als 15 % bezogen auf die Gesamtmasse, führt zu verschlechterten optischen Eigenschaften sowie einer schlechten Verarbeitbarkeit des Lacksystems. Die Mindestmenge des einzusetzenden Salzes hängt von den Verarbeitungsbedingungen sowie von dem zu lackierenden Holz ab, wobei unter anderem die Restfeuchte des Holzes, die Holzart und die mechanische Beschaffenheit der Holzoberfläche einen Einfluss auf die benötigte Salzmenge haben. Erste Effekte konnten bereits ab sehr niedrigen Salzmengen von 0,1 % beobachtet werden, während ein vielseitig einsetzbares Lacksystem eine Mindestsalzmenge von etwa 1,5 % bezogen auf die Gesamtmasse des Lacksystems benötigt.

Obwohl grundsätzlich beliebige Bindemittelsysteme denkbar sind, ist es bevorzugt, dass das Bindemittel ein Zweikomponenten-Polyurethansystem umfasst und insbesondere im Wesentlichen daraus gebildet ist. Dabei werden die zwei Komponenten, insbesondere eine Kunstharzbasis und ein Härter, besonders bevorzugt unmittelbar vor der Verwendung des Zweikomponenten-Lacksystems (2k-Lack) vermischt, um nachfolgend durch eine chemische Reaktion abzubinden. Das Bindemittel bzw. das Lacksystem ist grundsätzlich bevorzugt ein Reaktionslack, der besonders bevorzugt im Rahmen dieser chemischen Reaktion ein Polyurethan (PUR) bildet. Dabei kann bei dem Lacksystem zur anschließenden Verarbeitung bzw. zum Beschichten einer Oberfläche noch die Zugabe eines Härters notwendig sein, wobei der Härter erst kurz vor der Verwendung zugesetzt werden kann und entsprechend nicht zwingend Teil des Lacksystems sein muss bzw. eine separate Komponente des Lacksystems darstellt.

Entsprechend wird eine Ausgestaltung des erfindungsgemäßen Lacksystems bevorzugt, bei dem das Bindemittel aus zwei Komponenten gebildet ist, wobei die erste Komponente wenigstens ein hydroxyfunktionales Polymer, bevorzugt ein Polyol und besonders bevorzugt ein Acryl-, Polyester, Urethan- und/oder Expoxypolyol, sowie das Salz als Untergrund- bzw. Holzoberflächenglätter und gegebenenfalls auch ein insbesondere wasserfreies Lösemittel umfasst und/oder die zweite Komponente ein Härter auf Isocyanat-Basis, insbesondere ein Polyisocyanat ist, wobei die beiden Komponenten besonders bevorzugt derart gebildet sind, dass das Mischungsverhältnis der ersten und zweiten Komponente zwischen 2:1 und 25:1 gravimetrisch und/oder volumetrisch, insbesondere 10:1 volumetrisch, ist.

Insbesondere ist dabei eine vorteilhafte Weiterbildung des erfindungsgemäßen Lacksystems bevorzugt, bei dem die erste Komponente zwischen 25 % und 70 % eines oder mehrerer Bindemittel, insbesondere Acrylpolyole, und/oder zwischen 5 % und 15 % eines oder mehrerer Polyesterpolyole und/oder zwischen 20 % und 70 % Lösemittel und zwischen 2 % und 8 % als Untergrund- bzw. Holzoberflächenglätter wirkendes Salz bezogen auf die Masse der ersten Komponente umfasst, wobei bevorzugt der zu 100 % verbleibende Rest Hilfsstoffe sind, die besonders bevorzugt zwischen 1 % und 15 % der Masse der ersten Komponente ausmachen. Dabei beträgt das Massenverhältnis zwischen der ersten und der zweiten Komponente bevorzugt zwischen 2:1 und 25:1, besonders bevorzugt zwischen 8:1 und 12:1 und besonders bevorzugt etwa 10:1.

Bevorzugt weist die erste Komponente oder das gesamte Lacksystem einen Lösemittelanteil zwischen 20 % und 90 %, besonders bevorzugt zwischen 30 % und 80 % und ganz besonders bevorzugt zwischen 50 % und 70 % bezogen auf die Gesamtmasse auf.

Ganz besonders bevorzugt ist dabei eine Zusammensetzung einer Grundrezeptur der ersten Komponente 64 % eines oder verschiedener Acrylpolyole und 31 % eines oder mehrerer Lösemittel und 4 % des als Untergrund- bzw. Holzoberflächenglätter wirkenden Salzes und 1 % Hilfsstoffe und weitere Substanzen, jeweils bezogen auf die Masse der ersten Komponente, wobei Schwankungen der Bestandteile um bis zu 2 % unerheblich sind. Dabei wird die Grundrezeptur besonders bevorzugt mit einem handelsüblichen und insbesondere wasserfreiem PUR-Lack im Massenverhältnis 4:1 gemischt. Anschließend wird ein Härter hinzugefügt und der Lack auf die Holzoberfläche aufgetragen. Alternativ kann die Grundrezeptur auch ohne ein vorheriges Mischen mit einem PUR-Lack direkt eingesetzt und mit einem Härter vermischt werden.

Die weiteren, im Lacksystem enthaltenen Substanzen und insbesondere die Hilfsstoffe können beliebig gewählt sein und dabei insbesondere Additive sein, die die Eigenschaften des Lacksystems oder eine aus dem Lacksystem gebildete Lackschicht positiv beeinflussen. Solche Hilfsstoffe können beispielsweise Netz- und/oder Dispergieradditive sein, insbesondere zum Stabilisieren des Salzes im Lacksystem und ggf. auch für im Lack enthaltene Pigmente und/oder zur Erhöhung der Lagerstabilität. Dabei beträgt der Massenanteil des Dispergieradditivs bevorzugt zwischen 0,1 % und 5 %, besonders bevorzugt zwischen 0,5 % und 2 % und ganz besonders bevorzugt etwa 1 % der Gesamtmasse der ersten Komponente und/oder des gesamten Lacksystems. Weiterhin wird als Dispergieradditiv bevorzugt ein hochmolekulares Block-Copolymer, insbesondere mit pigment- und/oder Salz-affinen Gruppen, und/oder eine Aerosil-Paste bzw. Kieselsäure, insbesondere pyrogene Kieselsäure, verwendet.

Zur Verbesserung der Lackoberfläche, insbesondere um eine besonders glatte und/oder kratzfeste Lackoberfläche zu erhalten, können weitere Hilfsstoffe hinzugefügt werden, insbesondere Suspensionen synthetischer Wachse (Paraffine). Dabei beträgt der Anteil dieser die Lackoberfläche verbessernder Hilfsstoffe bevorzugt zwischen 0,1 % und 5 % der Gesamtmasse. Alternativ oder zusätzlich kann zur Verbesserung der Oberflächeneigenschaften ein mikronisiertes synthetisches Wachs enthalten sein, wobei der Anteil an der Gesamtmasse bevorzugt zwischen 0,01 % und 0,5 % beträgt.

Weiterhin können beliebige rheologische Hilfsstoffe in einer oder beiden Komponenten des Lacksystems enthalten sein, wobei bevorzugt ein Hilfsstoff zur Erhöhung der Viskosität bei geringeren Scherraten, besonders bevorzugt dafür eine Polyamid- oder Polyurethan-Wachs-Dispersion oder Aerosil eingesetzt wird. Der Anteil der rheologischen Hilfsstoffen und insbesondere der Polyamid-Wachs-Dispersion beträgt dabei bevorzugt zwischen 0,05 % und 1 % bezogen auf die Gesamtmasse.

Ebenfalls bevorzugt wird zusätzlich zu dem Hauptbindemittel wenigstens ein weiteres Bindemittel mit einem deutlich geringeren Anteil eingesetzt.

Zudem wird bevorzugt ein Polyethersiloxan-Copolymer zugesetzt, um in der fertigen Lackschicht eine besonders ebene Oberfläche zu gewährleisten. Dabei beträgt der Anteil an der Gesamtmasse bevorzugt zwischen 0,01 % und 0,5 %.

Nach einer bevorzugten Weiterbildung des erfindungsgemäßen Lacksystems ist das Lacksystem derart gebildet, dass die beim Aushärten gebildete Lackschicht transluzent, insbesondere transparent ist, wodurch die lackierte Holzoberfläche besonders gut sichtbar ist und entsprechend die Funktion des Untergrund- bzw. Holzoberflächenglätters besonders von Bedeutung ist, da die sich üblicherweise aufstellenden Holzfasern auf einer transparent lackierten Holzoberfläche nicht nur ertastbar, sondern auch sichtbar wären. Dabei meint transluzent generell, dass die fertige Lackschicht wenigstens lichtdurchlässig, aber nicht zwingend durchsichtig ist, während durch eine transparente Lackschicht ungehindert hindurchgesehen werden kann.

Mehrere Ausführungsbeispiele des erfindungsgemäßen Lacksystems und des erfindungsgemäßen Verfahrens werden nachfolgend näher erläutert.

Bei einer ersten Ausführung des Lacksystems wird ein Grundlack aus 64 % Hydroxylacryl-Harz bzw. acrylischen Polyolen in Butylacetat als Bindemittelbestandteil, 11 % n-Butylacetat sowie 20 % Methoxypropanol als Lösemittel, 1 % eines Dispergieradditivs in Form einer Lösung hochmolekularer Block-Copolymere mit pigment- und salzaffinen Gruppen gelöst in Xylol/Butylacetat/Methoxypropylacetat sowie 4 % Calciumchlorid-Dihydrat als Untergrund- bzw. Holzoberflächenglätter hergestellt, wobei alle Angaben auf die Gesamtmasse des Grundlacks bezogen sind.

Anschließend wird der Grundlack im Massenverhältnis 80:20 mit einem handelsüblichen lichtechten und transparenten Schichtlack mit einem Bindemittelsystem auf Polyurethan-Basis, insbesondere mit HESSE PUR-Lack, gemischt. Grundsätzlich ist jedoch auch eine Anwendung ohne vorheriges Mischen mit einem solchen Schichtlack möglich. Weiterhin wird der Mischung ein Härter, bevorzugt auf Isocyanatbasis und besonders bevorzugt ein HESSE PUR-Härter, insbesondere volumetrisch im Verhältnis 10:1, zugesetzt. Das Lacksystem lässt sich mit und ohne Zugabe eines Verdünners problemlos verarbeiten.

Um eine lackierte Holzoberfläche zu erhalten, wird das fertige Holzwerkstück ohne vorherigen Schliff lackiert, wobei die Auftragsmenge wie im PUR-Lack-Bereich üblich bei 120-180 g/m² liegt. Anschließend erfolgt eine Trocknung von mindestens 2 Stunden bei Raumtemperatur und eine Ablackierung ohne Schliff mit einer Glanzdecklackschicht, insbesondere einem HESSE PUR-Lack im volumetrischen Mischungsverhältnis 10:1 mit einem HESSE PUR-Härter. Auch nach einer Trocknung über Nacht (bis 16 h) kann ein Ergebnis mit guter Haftung erzielt werden.

Bei einer weiteren Ausführung des Lacksystems werden neben 52 % Hydroxylacryl-Harz bzw. acrylischen Polyolen in Butylacetat als Bindemittelbestandteil, 16,5 % n-Butylacetat als Lösemittel, 0,8 % eines Dispergieradditivs in Form einer Lösung hochmolekularer Block-Copolymere mit pigment- und salzaffinen Gruppen gelöst in Xylol / Butylacetat / Methoxypropylacetat zum Stabilisieren des Salzes im Lacksystem und zur Erhöhung der Lagerstabilität, 8 % eines Polyesterpolyols in Lösemittel als weiteres Bindemittel und 6 % Calciumchlorid-Dihydrat als Untergrund- bzw. Holzoberflächenglätter dem Gemisch zahlreiche weitere Hilfsstoffe zugegeben, wobei alle Anteile auf die Gesamtmasse bezogen sind.

Als weitere Hilfsstoffe werden unter anderem Polyethersiloxan-Copolymer mit einem Massenanteil von etwa 0,1 % bezogen auf die Gesamtmasse eingesetzt, um Kraterbildung der Lackoberfläche zu vermeiden.

Um eine besonders glatte und kratzfeste Lackoberfläche zu erhalten, werden Suspensionen synthetischer Wachse (Paraffine) mit einem Anteil an der Gesamtmasse von etwa 2,6 % eingesetzt. Zusätzlich wird zur Verbesserung der Oberflächeneigenschaften ein mikronisiertes synthetisches Wachs mit einem Massenanteil von etwa 0,1 % zugesetzt. Als UV-Stabilisator sind ein Benzophenon UV Absorber und Diphenylmetanon mit einem Massenanteil von etwa 0,01 % enthalten.

Weiterhin wird zur Erhöhung der Viskosität bei geringeren Scherraten eine Polyamid-Wachs-Dispersion mit einem Massenanteil von 0,2 % eingesetzt. Zur Erhöhung der Flexibilität der Polyurethanlackbeschichtung werden leichtverzweigte, hydroxylaufweisende Polyester als Flexibilisierer mit einem Massenanteil von etwa 0,68 % zugesetzt.

Zur endgültigen Verarbeitung wird das Gemisch dann im volumetrischen Mischungsverhältnis 10:1 mit einem Härter auf Isocyanatbasis, insbesondere mit HESSE PUR-Härter, zum verarbeitungsfähigen Produkt gemischt.

Zur Herstellung eines Grundlacks werden zunächst die zuvor angeführten, jeweils benötigten Komponenten, insbesondere 64 % Hydroxylacryl-Harz bzw. acrylische Polyole in Butylacetat als Bindemittelbestandteil, 11 % n-Butylacetat und/oder 20 % Methoxypropanol als Lösemittel sowie 1 % eines Dispergieradditivs in Form einer Lösung hochmolekularer Block-Copolymere mit pigment- und salzaffinen Gruppen gelöst in Xylol / Butylacetat / Methoxypropylacetat abgewogen, wobei sich die Prozentangaben auf Massenanteile beziehen. Anschließend wird diese Mischung in eine Rührwerksmühle, insbesondere in eine Perlmühle, gegeben, mittels der nachfolgend 4 % Calciumchlorid-Dihydrat als Untergrund- bzw. Holzoberflächenglätter in dieser Mischung homogen dispergiert werden. Im Labormaßstab ist auch ein Dispergieren mit Glasperlen möglich.

Die Einsatzmenge des Calciumchlorid-Dihydrats von 4 % bezogen auf die Masse des Grundlacks wurde als optimale Menge ermittelt. Es wurden Abstufungen von Calciumchlorid-Dihydrat mit Zugabemengen von 0% - 20% durchgeführt. Das Calciumchlorid-Dihydrat war auch in größeren Mengen noch einzuarbeiten, allerdings traten bei sehr hohen Zugabemengen von deutlich über 10 % negative Effekte im fertigen Lack, wie starke Trübung und schmierige Oberflächen auf. Versuche mit anderen Salzen, insbesondere Natriumchlorid, Ammoniumpolyphosphat und Kaliumcarbonat, haben keine zufriedenstellende und/oder eine deutlich schlechtere Wirkung dieser Salze gegenüber Calciumchlorid als Untergrund- bzw. Holzoberflächenglätter in einem Lacksystem gezeigt oder ließen sich nicht ausreichend homogen im Lacksystem dispergieren. Demgegenüber zeigten Erdalkalimetallhalogenide deutlich bessere Ergebnisse.

## Patentansprüche

1. Lacksystem zum zwischenschlifffreien Auftrag auf eine Holzoberfläche, mit
- wenigstens einer Beschichtungsbasis umfassend ein Bindemittel und
- wenigstens einem als Untergrund- bzw. Holzoberflächenglätter wirkenden Salz.

2. Lacksystem nach Anspruch 1, **dadurch gekennzeichnet, dass** der Untergrund- bzw. Holzoberflächenglätter ein anorganisches Salz ist.

3. Lacksystem nach Anspruch 1 oder 2, **dadurch gekennzeichnet, dass** der Untergrund- bzw. Holzoberflächenglätter ein Alkalihalogenid oder ein Erdalkalihalogenid ist.

4. Lacksystem nach einem der vorhergehenden Ansprüche, **dadurch gekennzeichnet, dass** der Untergrund- bzw. Holzoberflächenglätter Kaliumchlorid-Hexahydrat, Magnesiumchlorid-Hexahydrat und/oder Calciumchlorid-Dihydrat ist.

5. Lacksystem nach einem der vorhergehenden Ansprüche, **dadurch gekennzeichnet, dass** der Untergrund- bzw. Holzoberflächenglätter ein Salz mit einem Elektronegativitätsunterschied von wenigstens 2 auf der Pauling-Skala ist.

6. Lacksystem nach einem der vorhergehenden Ansprüche, **dadurch gekennzeichnet, dass** der Untergrund- bzw. Holzoberflächenglätter als im Bindemittel dispergiertes und/oder ungelöstes Salz vorliegt.

7. Lacksystem nach einem der vorhergehenden Ansprüche, **dadurch gekennzeichnet, dass** das gesamte Lacksystem wasserfrei ist.

8. Lacksystem nach einem der vorhergehenden Ansprüche, **dadurch gekennzeichnet, dass** der Massenanteil des als Untergrund- bzw. Holzoberflächenglätter wirkenden Salzes zwischen 1% und 10 % bezogen auf die Gesamtmasse beträgt.

9. Lacksystem nach einem der vorhergehenden Ansprüche, **dadurch gekennzeichnet, dass** das Bindemittel ein Zweikomponenten-Polyurethansystem ist.

10. Lacksystem nach einem der vorhergehenden Ansprüche, **dadurch gekennzeichnet, dass** das Bindemittel aus zwei Komponenten gebildet ist, wobei die erste Komponente wenigstens einen Polyesterpolyol sowie das Salz als Untergrund- bzw. Holzoberflächenglätter und ein wasserfreies Lösemittel umfasst und die zweite Komponente ein Härter auf Isocyanat-Basis ist.

11. Lacksystem nach einem der vorhergehenden Ansprüche, **dadurch gekennzeichnet, dass** die erste Komponente zwischen 50 % und 70 % Acrylpolyole, zwischen 20 % und 40 % Lösemittel und zwischen 2 % und 8 % als Untergrund- bzw. Holzoberflächenglätter wirkendes Salz bezogen auf die Masse der ersten Komponente umfasst.

12. Lacksystem nach einem der vorhergehenden Ansprüche, **dadurch gekennzeichnet, dass** die beim Aushärten gebildete Lackschicht transparent ist.

13. Verfahren zum Herstellen eines Lacksystems zum zwischenschlifffreien Auftrag auf eine Holzoberfläche, umfassend die Schritte:
- Herstellen einer Beschichtungsbasis umfassend ein Bindemittel und
- Einarbeiten eines als Untergrund- bzw. Holzoberflächenglätter wirkenden Salzes durch Dispergieren, Vermahlen oder Fällen.

14. Verwendung eines Lacksystems nach einem der Ansprüche 1 - 12 auf einer nicht zwischengeschliffenen, insbesondere nur grobgeschliffenen und/oder nicht-grundierten Holzoberfläche zum zwischenschlifffreien Erzeugen einer Lackbeschichtung.
